# FASCICULE DE BREVET EUROPEEN

(11) **EP 1 825 132 B1**
(45) Date de publication et mention de la délivrance du brevet: **28.04.2010**
(21) Numéro de dépôt: 04816511.2
(22) Date de dépôt: 06.12.2004
(51) Int. Cl.: F02M 35/08, F01N 5/04, B01F 5/04, F01N 1/24, F01N 1/14

(54) **ELEMENT D'UN CIRCUIT D'ECHAPPEMENT DE MOTEUR A COMBUSTION**
ELEMENT FÜR DEN ABGASKREISLAUF EINES VERBRENNUNGSMOTORS
ELEMENT FOR THE EXHAUST CIRCUIT OF AN INTERNAL COMBUSTION ENGINE

(43) Date de publication de la demande: 29.08.2007
(73) Titulaire: Renault Trucks, 69802 Saint Priest (FR)
(72) Inventeur: VIGNASSA, Philippe, F-38200 Vienne (FR); PARET, Alain, 38290 Frontonas (FR)
(74) Mandataire: Putet, Gilles
(86) Numéro de dépôt international: PCT/FR2004/050657
(87) Numéro de publication internationale: WO 2006/061466

(56) Documents cités:
- EP-A- 0 526 673
- EP-A- 1 072 307
- FR-A- 796 818
- FR-A- 2 415 201
- US-A- 4 299 655

## Description

### Domaine technique

L'invention se rattache au domaine des circuits d'échappement pour moteur à combustion. Elle concerne plus spécifiquement un élément d'un circuit d'échappement qui comporte un dispositif de type venturi, destiné à générer une dépression utilisable dans un autre équipement associé au moteur. Cet équipement peut notamment être un dispositif de filtrage d'air.

L'invention trouve une application particulière dans tous les véhicules industriels utilisant un moteur à combustion et des dispositifs de filtrage d'air.

### Techniques antérieures

Les moteurs à combustion, notamment dans les véhicules industriels, sont susceptibles de fonctionner dans des atmosphères polluées, et chargées en particules. On peut notamment citer l'exemple des camions évoluant dans des carrières ou des régions géographiques dont l'atmosphère est chargée de poussières ou de sable.

Ce type de véhicule est équipé d'un dispositif de filtrage d'air combinant généralement un filtrage fin par une membrane filtrante, et un pré-filtre pouvant fonctionner sur le principe d'une centrifugation des particules. Ce type de pré-filtre nécessite la création d'une dépression destinée d'une part, à générer l'effet centrifuge et d'autre part, à éliminer les poussières ainsi filtrées.

Il est connu d'utiliser la circulation des gaz d'échappement pour générer une dépression correspondant à ce besoin. Pour ce faire, une portion du circuit d'échappement comporte un système de venturi dont la zone d'aspiration est reliée au pré-filtre à air.

De multiples architectures ont déjà été proposées pour intégrer ce venturi dans différentes parties du circuit d'échappement, qu'il s'agisse d'un silencieux, ou bien encore de tubulures de liaison entre parties actives du circuit d'échappement. Différents exemples sont décrits dans les documents US 3 419 892, US 4 178 760, US 4 325 460, US 4 580 657, US 4 697 668, JP 09 236 013, FR 796 818.

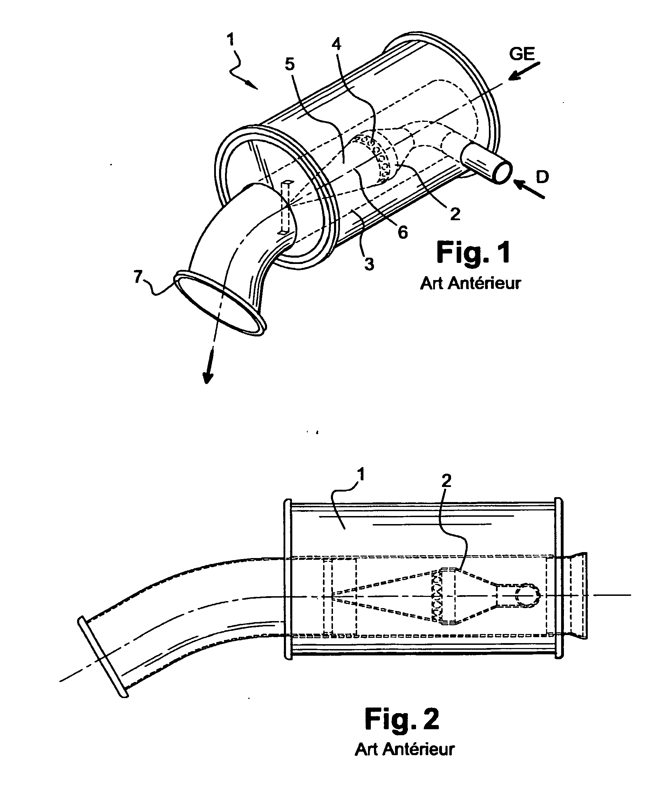

Dans une forme particulière exploitée commercialement par le Demandeur, et illustrée aux figures 1 et 2, le venturi est formé à l'intérieur du dispositif (1) de silencieux, disposé en fin de circuit d'échappement.

Le venturi comporte un organe (2) occupant une fraction du volume interne (3) du silencieux, pour former une réduction de la section de passage nécessaire pour obtenir l'effet venturi et provoquer l'aspiration (D) des poussières. Cet organe (2) présente une pluralité d'ouvertures d'aspiration (4) ménagées en amont d'un corps conique (5) ayant son axe parallèle au sens d'écoulement des gaz d'échappement (GE), et dirigé vers la sortie du silencieux (7).

Des contraintes aérodynamiques imposent un dimensionnement particulier de cet organe inséré à l'intérieur du silencieux.

En effet, on sait de façon générale, qu'un venturi fonctionne de manière satisfaisante si la réduction de section de passage du flux principal est de l'ordre de 80 % environ. En effet, plus la section est importante, plus la dépression générée est élevée, ce qui est recherché pour assurer la fonction d'éjection des poussières centrifugées dans le filtre à air.

Cependant, la réduction de section du passage des gaz d'échappement ne doit pas être trop importante, au risque de provoquer une réduction des performances du moteur à combustion. C'est pourquoi dans la solution illustrée à la figure 1, le corps (2) présente une section sensiblement égale à 80 % de la section de la tubulure interne (3) du silencieux.

Compte tenu du diamètre de ce corps (2), d'autres contraintes aérodynamiques imposent un dimensionnement particulier au cône. En effet, on a remarqué que l'inclinaison de la paroi du cône (5) par rapport à l'axe (6) du flux des gaz d'échappement avait une incidence forte sur le bon fonctionnement du venturi.

En effet, l'expérience montre que si l'inclinaison des parois du cône par rapport à cet axe de symétrie dépasse les 10° environ, on observe des phénomènes de décollement de la couche limite. Ces phénomènes génèrent des perturbations du flux aérodynamique, une augmentation des pertes de charge et du bruit aérodynamique, avec des conséquences sur les performances et la fiabilité du moteur d'une part, et le niveau de bruit généré en sortie du silencieux, d'autre part. Or, le niveau de bruit ne doit pas dépasser des valeurs limites fixées par diverses réglementations en vigueur.

C'est pourquoi le demi angle du cône doit rester à une valeur relativement réduite, inférieure à 10°. Toutefois, la réduction du demi angle du cône se traduit géométriquement par l'allongement de ce dernier, et donc un encombrement global croissant.

### Exposé de l'invention

L'objectif de l'invention est donc de réduire l'encombrement nécessaire pour l'intégration d'un venturi à l'intérieur d'un élément du circuit d'échappement, et ce sans augmenter le niveau de bruit à l'échappement, pour rester conforme aux réglementations en matière de bruit. Cette intégration doit également chercher à ne pas réduire ni les performances du moteur, ni l'efficacité du venturi en terme d'aspiration.

L'invention concerne donc un élément d'un circuit d'échappement du moteur à combustion. De façon connue, cet élément comporte un organe occupant une fraction de son volume interne, pour former un venturi. Plus précisément, cet organe présente au moins une ouverture d'aspiration, ménagée en amont d'un corps sensiblement symétrique par rapport à un axe de symétrie parallèle au sens d'écoulement des gaz d'échappement.

Conformément à l'invention, la face externe de ce corps présente une inclinaison par rapport à l'axe de symétrie du corps qui croît en se dirigeant dans le sens de circulation des gaz d'échappement.

Autrement dit, par rapport aux dispositifs connus incluant un cône unique, le corps du venturi présent un diamètre qui diminue plus rapidement en se dirigeant dans le sens des gaz d'échappement, de sorte que la longueur totale du corps du venturi est réduite. En d'autres termes, les dispositifs connus à ce jour présentent un profil linéaire, à pente ou inclinaison constante, alors que l'invention au contraire consiste à conférer au corps caractéristique un profil non linéaire, avec une pente qui évolue en se rapprochant de l'extrémité du corps. Il s'ensuit que l'encombrement global du venturi est inférieur, ce qui augmente les possibilités d'emplacement au sein de la ligne d'échappement.

Cette inclinaison est mesurée dans le sens de circulation des gaz, c'est-à-dire dans un plan passant par l'axe de symétrie du corps caractéristique. Du fait que l'inclinaison des parois du corps croît, il est possible que cette inclinaison dépasse la valeur limite de 10° par rapport à l'axe de circulation des gaz, dont on a exposé ci-avant l'intérêt d'un point de vue aérodynamique. Toutefois, il apparaît que ce dépassement n'est pas réellement critique, et ne génère pas de turbulences néfastes, dans la mesure où l'accroissement de cette inclinaison est relativement progressive, c'est-à-dire sans saut de plus de 10°. En d'autres termes, on n'observe pas de décollement de la couche limite de l'écoulement dès lors qu'il n'y a pas de rupture de pente supérieure à 10° le long du corps caractéristique.

En pratique, la progression de l'inclinaison peut être continue, pour ressembler à un arc en ogive. Toutefois, pour des raisons de facilité de fabrication, on préférera une progression discrète de cette inclinaison, par pas successifs.

De cette manière, le corps comprend au moins deux portions tronconiques successives, la valeur de l'angle d'ouverture de chacune des portions tronconiques étant croissante en se dirigeant dans le sens de circulation d'échappement des gaz.

Autrement dit, l'inclinaison du corps par rapport à l'axe de symétrie augmente d'une portion à l'autre, lorsque l'on se dirige vers la sortie du circuit d'échappement.

Avantageusement en pratique, la différence entre les deux demi angles d'ouverture de deux portions tronconiques successives est inférieure à 10°, pour éviter des phénomènes de décollement de la couche limite, au passage d'une portion tronconique à la suivante.

Selon une forme de réalisation particulière, les portions tronconiques peuvent présenter des longueurs mesurées selon le sens de circulation des gaz d'échappement qui sont sensiblement égales. Grâce à cette disposition, on réalise un compromis entre la longueur globale de l'élément, et son comportement aérodynamique. En effet, on conçoit que plus les portions tronconiques sont courtes, plus la longueur globale de l'élément caractéristique est réduite. Toutefois, il convient de ménager des portions tronconiques de longueur suffisante pour stabiliser l'écoulement des gaz à son contact, et éviter les perturbations aérauliques néfastes pour les performances aérodynamiques.

Avantageusement en pratique, l'organe formant le venturi peut comporter une pluralité d'ouvertures d'aspiration et équiréparties sur son pourtour. L'intérieur du corps et de l'organe sont reliés à une conduite d'aspiration destinée à acheminer la dépression ainsi créée, au niveau du filtre à air par exemple.

Dans une forme de réalisation particulière, le corps peut être perforé et rempli d'un matériau fibreux, à l'instar d'un silencieux, de manière à absorber une partie du bruit aérodynamique.

Pour assurer une bonne fixation de l'organe formant le venturi à l'intérieur du volume de l'élément du circuit d'échappement, on peut prévoir une patte de maintien au niveau de l'extrémité du corps, assurant la liaison avec les parois internes du volume accueillant le venturi.

En pratique, cet organe formant le venturi peut être ainsi disposé à divers niveaux du circuit d'échappement, et de préférence le plus près de l'extrémité libre de la ligne d'échappement, pour augmenter son efficacité. En effet, le venturi est d'autant plus efficace qu'il est proche de la sortie du circuit d'échappement, car la dépression utile pour l'éjection des poussières du filtre à air est relative à la pression atmosphérique. On a donc avantage à générer grâce au venturi une dépression par rapport aux gaz d'échappement lorsqu'ils se trouvent à une pression la plus proche de la pression atmosphérique, c'est à dire à proximité de la sortie du circuit d'échappement. Ainsi, en fonction de la configuration de la ligne d'échappement, le venturi peut être formé soit à l'intérieur d'un silencieux, ou bien encore à l'intérieur d'une conduite tubulaire de jonction entre différents éléments du circuit d'échappement.

### Description sommaire des figures

La manière de réaliser l'invention ainsi que les avantages qui en découlent ressortiront bien de la description des modes de réalisation qui suit, à l'appui des figures annexées, dans lesquelles :
La figure 1 est une vue en perspective sommaire d'un silencieux d'échappement selon les enseignements de l'art antérieur.
La figure 2 est une vue de côté du silencieux de la figure 1.
La figure 3 est une vue en coupe longitudinale d'un élément du circuit d'échappement conforme à l'invention.
Les figures 4 à 7 sont des vues en coupe longitudinale de variantes de réalisation.

### Manière de réaliser l'invention

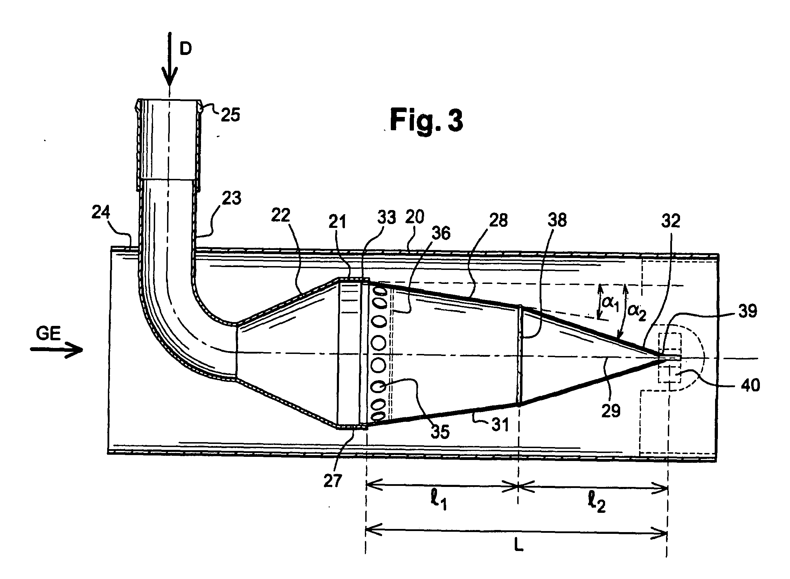

La figure **3** illustre un élément d'un circuit d'échappement se présentant sous la forme d'une tubulure (20) sensiblement cylindrique accueillant en son centre un organe (21) obturant partiellement la section de passage des gaz d'échappement circulant selon la flèche (GE).

Cet organe (21) se compose d'une trompe (22) reliée à un conduit coudé (23), traversant la paroi (24) du conduit (20). Cette portion coudée (23) comporte à son extrémité des agencements (25) permettant la connexion avec d'autres dispositifs montés sur le véhicule, et par exemple un pré-filtre à air.

L'organe (21) comporte en aval de sa zone la plus large (27), un corps caractéristique (28), de forme générale symétrique autour d'un axe (29), lui-même parallèle au sens (GE) de circulation des gaz d'échappement. Ce corps (28) est composé de deux portions tronconiques (31, 32). La portion tronconique la plus large (31) est montée à l'extrémité de la trompe (22) et solidarisée à cette dernière par soudure étanche, pour éviter les fuites, génératrices de perturbations, et donc de chute d'efficacité. A proximité de la jonction (33) avec la trompe (21), la première portion tronconique (31) comporte une pluralité d'ouvertures traversantes (35) typiquement circulaires. Ces perçages (35) sont disposés régulièrement sur tout le pourtour de la base de la portion tronconique (31) de manière à répartir l'aspiration de manière homogène à l'intérieur du conduit (20).

Dans la forme particulière de réalisation illustrée à la figure 3, la première portion tronconique (31) comporte une plaque (36) isolant l'intérieur du corps (30), en aval des perçages (35). Cette plaque (36) permet de rigidifier l'ensemble du corps.

La seconde portion tronconique (32) prolonge la première position tronconique (31), et est soudée à cette dernière au niveau de la circonférence (38).

Dans une forme particulière de réalisation, les portions tronconiques (31,32) peuvent être perforées et remplies d'un matériau fibreux, par exemple à base de laine de roche ou de basalte, permettant d'atténuer de façon plus importante le niveau de bruit aérodynamique.

L'extrémité (39) de la seconde partie tronconique (32) (qui est donc conique) est solidarisée à une patte de maintien (40), elle-même soudée aux parois internes du conduit (20).

Selon l'invention, les deux portions tronconiques (31, 32) présentent des demi angles d'ouvertures qui sont différents. Plus précisément, la première portion tronconique (31) présente un demi angle d'ouverture (α₁) inférieur à 10°, et typiquement voisin de 8,5°. La seconde portion tronconique (32) présente quant à elle un demi angle d'ouverture (α₂), qui dans l'exemple de réalisation illustré, vaut α₂ = 2 x α₁, soit 17°. Il importe de noter que la différence α₂ - α₁ est inférieure à 10°, pour que n'apparaisse pas de phénomène de décollement de la couche limite au passage de la zone de jonction (38).

Bien entendu, le principe exposé avec deux parties tronconiques peut être décliné en augmentant le nombre de portions tronconiques mises bout à bout dans le but de réduire la longueur globale (L) du corps (28).

A titre d'exemple, pour un conduit (24), présentant un diamètre de 125 mm, on a déterminé que le corps (28) doit présenter un diamètre de 100 mm environ, correspondant à 80 % du diamètre du conduit (24), pour obtenir un fonctionnement optimal du venturi. Selon les caractéristiques de l'invention, la première portion tronconique (31) présente une longueur (ℓ₁) de 91 mm avec un demi angle d'ouverture de 8,5°, et la seconde portion de demi angle d'ouverture de 17° présente une longueur (ℓ₂) de 119 mm, ce qui conduit à une longueur totale (L=ℓ₁+ℓ₂) du corps (28) de 210 mm environ.

Cette valeur est à comparer avec les solutions de l'art antérieur qui donnent pour un même diamètre de corps et un même demi angle d'ouverture de 8,5°, une longueur globale de 335 mm.

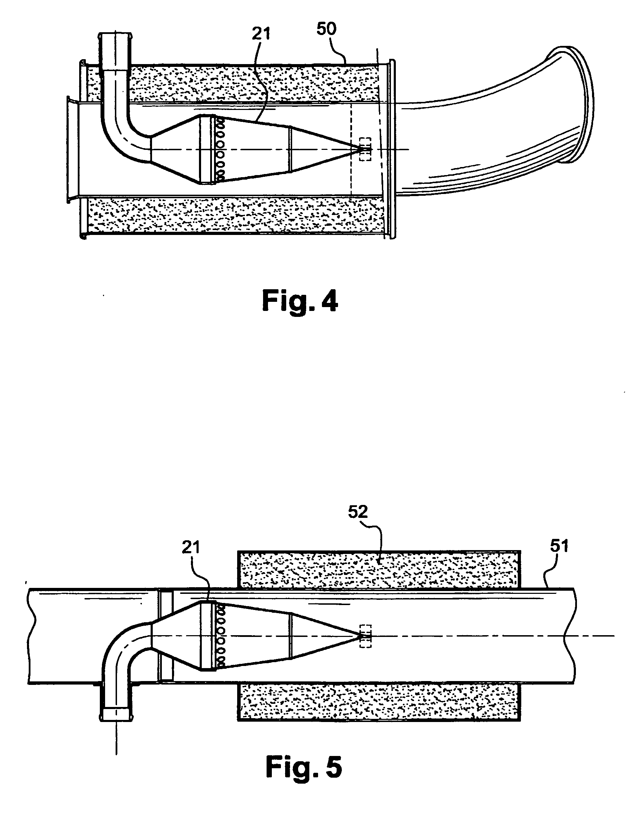

Autrement dit, le corps conforme à l'invention présente une longueur totale et donc un encombrement inférieur de plus d'un tiers par rapport aux solutions de l'art antérieur. Cet encombrement permet d'installer un venturi à divers endroits de la ligne d'échappement, et notamment comme illustré à la figure 4 à l'intérieur d'un silencieux (50) situé en extrémité de la ligne d'échappement, ou bien encore, comme illustré à la figure 5, à l'intérieur d'une tubulure (51) également équipée d'un dispositif de silencieux (52), à un niveau intermédiaire de la ligne d'échappement.

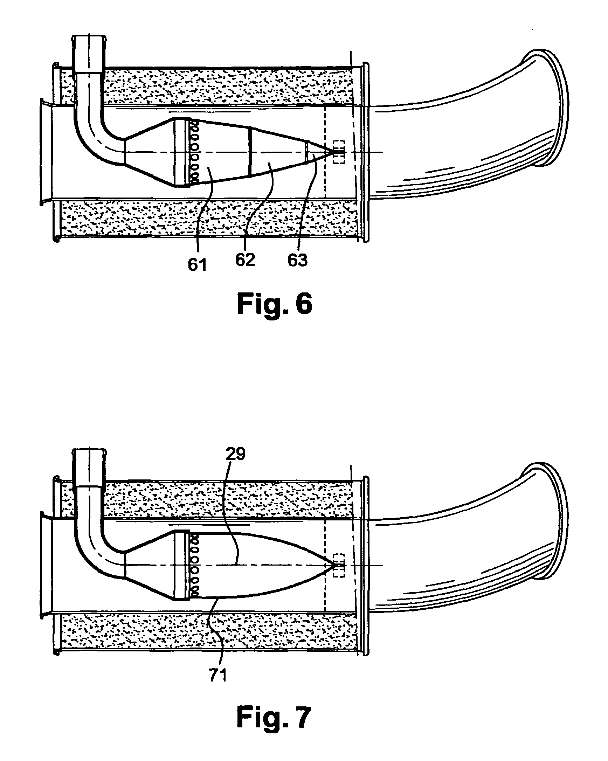

Bien entendu, l'invention couvre de multiples variantes dérivées, par exemple comportant un nombre supérieur de portions tronconiques, et notamment trois portions (61,62,63) comme illustré à la figure 6. Dans une autre variante illustrée à la figure 7, le corps caractéristique (71) est en forme d'obus, et l'inclinaison de sa face externe par rapport à son axe de révolution (29) croît continûment en se dirigeant dans le sens des gaz d'échappement.

Il ressort de ce qui précède que la conception de l'organe formant le venturi conforme à l'invention permet d'en réduire très fortement l'encombrement, et ce sans dégrader les performances d'aspiration ni augmenter les pertes de charge globales de la ligne d'échappement.

## Revendications

1. Elément (20) d'un circuit d'échappement de moteur à combustion, comportant un organe (21) occupant une fraction du volume interne dudit élément pour former un venturi, ledit organe présentant au moins une ouverture d'aspiration (35) ménagée en amont d'un corps (28) sensiblement symétrique par rapport à un axe de symétrie (29) parallèle au sens d'écoulement des gaz d'échappement, le corps présentant un diamètre qui diminue en se dirigeant dans le sens de circulation des gaz d'échappement, **caractérisé en ce que** la face externe dudit corps (28) présente une inclinaison (α1, α2) par rapport audit axe (29) qui croît en se dirigeant dans le sens de circulation des gaz d'échappement (GE)

2. Elément selon la revendication 1, **caractérisé en ce que** l'inclinaison de la face externe du corps (28) croît de façon discrète.

3. Elément selon la revendication 2, **caractérisé en ce que** le corps (28) comprend au moins une première portion tronconique (31), ayant un premier demi-angle d'ouverture (α1), et une deuxième portion tronconique (32), ayant un second demi-angle d'ouverture (α2), disposées successivement dans le sens de circulation des gaz d'échappement, et **en ce que** le second demi-angle d'ouverture (α2) est supérieur au premier demi-angle d'ouverture (α1).

4. Elément selon la revendication 3, **caractérisé en ce que** la première portion tronconique présente un demi-angle d'ouverture inférieur à 10°.

5. Elément selon l'une des revendications 3 ou 4, **caractérisé en ce que** la différence entre les deux demi angles d'ouverture (α1, α2) de deux portions tronconiques successives (31, 32) est inférieure à 10°.

6. Elément selon la revendication 2, **caractérisé en ce que** les portions tronconiques (31,32) présentent des longueurs (l₁, l₂), mesurées selon le sens de circulation des gaz d'échappement, qui sont sensiblement égales.

7. Elément selon la revendication 1, **caractérisé en ce que** l'inclinaison de la face externe du corps (71) croît de façon continue.

8. Elément l'une quelconque des revendications précédentes, **caractérisé en ce que** l'organe comporte une pluralité d'ouvertures d'aspiration (35) équiréparties sur le pourtour de l'organe (21) formant le venturi.

9. Elément selon l'une quelconque des revendications précédentes, **caractérisé en ce que** le corps (28) est perforé et rempli d'un matériau fibreux.

10. Elément selon l'une quelconque des revendications précédentes, **caractérisé en ce qu'**il comporte une patte (40) de maintien de l'extrémité (39) du corps (28) de l'organe formant le venturi, pour assurer la liaison avec des parois internes du volume accueillant le corps (28).

11. Elément selon l'une quelconque des revendications précédentes, **caractérisé en ce qu'**il forme un silencieux (50) du circuit d'échappement.

12. Elément selon l'une quelconque des revendications précédentes, **caractérisé en ce qu'**il forme une conduite tubulaire.

13. Elément selon l'une quelconque des revendications précédentes, **caractérisé en ce que** le corps (28) présente un extrémité conique.

## Claims

1. Element (20) of an exhaust circuit of a combustion engine, comprising a member (21) occupying a fraction of the internal volume of the said element so as to form a venturi, the said member having at least one suction opening (35) formed upstream of a body (28) which is substantially symmetrical with respect to an axis of symmetry (29) parallel to the direction of flow of the exhaust gases, the body having a diameter which decreases when viewed in the direction of circulation of the exhaust gases, **characterized in that** the external face of the said body (28) has an inclination (α1, α2) with respect to the said axis (29) which increases when viewed in the direction of circulation of the exhaust gases (GE).

2. Element according to Claim 1, **characterized in that** the inclination of the external face of the body (28) increases discretely.

3. Element according to Claim 2, **characterized in that** the body (28) comprises at least a first frustoconical portion (31), having a first half aperture angle (α1), and a second frustoconical portion (32), having a second half aperture angle (α2), which are arranged successively in the direction of circulation of the exhaust gases, and **in that** the second half aperture angle (α2) is greater than the first half aperture angle (α1).

4. Element according to Claim 3, **characterized in that** the first frustoconical portion has a half aperture angle less than 10°.

5. Element according to either of Claims 3 and 4, **characterized in that** the difference between the two half aperture angles (α1, α2) of two successive frustoconical portions (31, 32) is less than 10°.

6. Element according to Claim 2, **characterized in that** the frustoconical portions (31, 32) have lengths (l₁, l₂), measured in the direction of circulation of the exhaust gases, which are substantially equal.

7. Element according to Claim 1, **characterized in that** the inclination of the external face of the body (71) increases continuously.

8. Element according to any one of the preceding claims, **characterized in that** the member comprises a plurality of suction openings (35) equally distributed over the periphery of the member (21) forming the venturi.

9. Element according to any one of the preceding claims, **characterized in that** the body (28) is perforated and filled with a fibrous material.

10. Element according to any one of the preceding claims, **characterized in that** it comprises a tab (40) for retaining the end (39) of the body (28) of the member forming the venturi, in order to provide the connection with internal walls of the volume receiving the body (28).

11. Element according to any one of the preceding claims, **characterized in that** it forms a silencer (50) of the exhaust circuit.

12. Element according to any one of the preceding claims, **characterized in that** it forms a tubular pipe.

13. Element according to any one of the preceding claims, **characterized in that** the body (28) has a conical end.

## Patentansprüche

1. Element (20) eines Auspuffkreises für einen Verbrennungsmotor mit einer Einrichtung (21), die einen Teil des Innenvolumens des Elements zur Bildung eines Venturi einnimmt, wobei die Einrichtung wenigstens eine Ansaugöffnung (35) aufweist, die stromaufwärts eines Körpers (28) angeordnet ist, der bezogen auf eine zur Strömungsrichtung der Abgase parallele Symmetrieachse (29) im Wesentlichen symmetrisch ist, wobei der Körper einen Durchmesser aufweist, der sich in Richtung der Zirkulationsrichtung der Abgase verringert, **dadurch gekennzeichnet, dass** die Außenfläche des Körpers (28) bezogen auf die Achse (29) eine Neigung (α1, α2) aufweist, die in Richtung der Zirkulationsrichtung der Abgase (GE) zunimmt.

2. Element nach Anspruch 1, **dadurch gekennzeichnet, dass** die Neigung der Außenfläche des Körpers (28) unstetig zunimmt.

3. Element nach Anspruch 2, **dadurch gekennzeichnet, dass** der Körper (28) wenigstens einen ersten kegelstumpfartigen Abschnitt (31) mit wenigstens einem ersten halben Öffnungswinkel (α1) und einen zweiten kegelstumpfartigen Abschnitt (32) mit einem zweiten halben Öffnungswinkel (α2) aufweist, die aufeinanderfolgend in der Zirkulationsrichtung der Abgase angeordnet sind, und dass der zweite halbe Öffnungswinkel (α2) größer als der erste halbe Öffnungswinkel (α1) ist.

4. Element nach Anspruch 3, **dadurch gekennzeichnet, dass** der erste kegelstumpfartige Abschnitt einen halben Öffnungswinkel aufweist, der kleiner als 10° ist.

5. Element nach einem der Ansprüche 3 oder 4, **dadurch gekennzeichnet, dass** die Differenz zwischen den beiden halben Öffnungswinkeln (α1, α2) der beiden aufeinanderfolgenden kegelstumpfartigen Abschnitte (31, 32) weniger als 10° beträgt.

6. Element nach Anspruch 2, **dadurch gekennzeichnet, dass** die kegelstumpfartigen Abschnitte (31, 32) in der Zirkulationsrichtung der Abgase gemessene Längen (l₁, l₂) aufweisen, die im Wesentlichen gleich sind.

7. Element nach Anspruch 1, **dadurch gekennzeichnet, dass** die Neigung der Außenfläche des Körpers (71) kontinuierlich zunimmt.

8. Element nach einem der vorhergehenden Ansprüche, **dadurch gekennzeichnet, dass** die Einrichtung eine Vielzahl von Ansaugöffnungen (35) umfasst, die gleichmäßig über den Außenumfang der das Venturi bildenden Einrichtung (21) verteilt sind.

9. Element nach einem der vorhergehenden Ansprüche, **dadurch gekennzeichnet, dass** der Körper (28) perforiert und mit einem Fasermaterial gefüllt ist.

10. Element nach einem der vorhergehenden Ansprüche, **dadurch gekennzeichnet, dass** es eine Lasche (40) zum Halten des Endes (39) des Körpers (28) der das Venturi bildenden Einrichtung umfasst, um die Verbindung mit den Innenwänden des den Körper (28) aufnehmenden Volumens zu gewährleisten.

11. Element nach einem der vorhergehenden Ansprüche, **dadurch gekennzeichnet, dass** es einen Schalldämpfer (50) des Auspuffkreises bildet.

12. Element nach einem der vorhergehenden Ansprüche, **dadurch gekennzeichnet, dass** es eine Rohrleitung bildet.

13. Element nach einem der vorhergehenden Ansprüche, **dadurch gekennzeichnet, dass** der Körper (28) ein konisches Ende aufweist.
